# EUROPEAN PATENT APPLICATION

(11) **EP 4 737 679 A1**
(43) Date of publication of application: **06.05.2026**
(21) Application number: 25211972.2
(22) Date of filing: 29.10.2025
(51) Int. Cl.: E21B 23/14, G06N 3/0464

(54) **SYSTEMS AND METHODS FOR ENHANCING WIRELINE CONVEYANCE MODELING IN WIRELINE CONVEYANCE USING PHYSICS-INFORMED NEURAL NETWORK**

(30) Priority: 30.10.2024 US 202418932146
(71) Applicant: Services Pétroliers Schlumberger, 75007 Paris (FR); Schlumberger Technology B.V., 2514 JG The Hague (NL)
(72) Inventor: WANG, Jiacheng, Missouri City, 77459 (US); BAKLANOV, Nikolay, Sugar Land, 77478 (US)
(74) Representative: Schlumberger Intellectual Property Department

(57) **Abstract**

Systems and methods for enhancing wireline conveyance modeling in wireline conveyance using a physics-informed neural network (PINN) are provided. A method includes: receiving historical job data from at least one past wireline conveyance operation, the historical job data including: static input data, and timeseries input data, processing the historical job data through a neural network (NN) configured to learn the relationships between input features and target variables including: an input layer, a plurality of hidden layers, and an output layer, integrating the neural network with a numerical physics-based wireline conveyance model to form a physics-informed neural network (PINN), training the PINN using the historical job data and estimation results of the physical model to enhance prediction accuracy, utilizing the trained PINN to predict at least one physical parameter for a current wireline conveyance operation, and outputting the predicted at least one physical parameter for use in the wireline conveyance operation.

## Description

### TECHNICAL FIELD

This disclosure generally relates to systems and methods for enhancing wireline conveyance modeling, and more particularly, systems and methods for enhancing wireline conveyance modeling in wireline conveyance using a physics-informed neural network (PINN).

### BACKGROUND

Wireline conveyance involves delivering a tool string to its target depth within a well for operation and retrieving it afterward using wireline system, e.g., in well-logging and perforation operations. This process generates real-time surface sensor readings of cable speed, cable length, surface tension, head tension, and/or sticking force. The cable speed refers to the rate of releasing or retrieving the wireline cable, while cable length denotes the total length of the cable deployed into the well. Surface tension refers to the force on the wireline cable measured at the ground level generated by the toolstring and cable as the tool string is being lowered into or pulled out of the well (or wellbore). Surface tension may be influenced by various factors, including cable speed and length, tool and cable weight and shape, buoyancy, friction, hydrodynamic force, well geometry, etc. Head tension refers to the tension measured at the uppermost section of the downhole tool inside the wellbore, and indicates the load experienced by the wireline. Sticking force refers to a product of the differential pressure between the wellbore and the reservoir and the area upon which the differential pressure is acting.

Understanding of the interaction between wireline components and wellbore elements is crucial for accurately interpreting tool string dynamics during wireline conveyance. Traditional physics-based tension models, which have been widely used for conveyance job planning, often lack prediction accuracy due to the simplification of physics and inaccessibility of downhole parameters, particularly in deeper, deviated wells with viscous fluids.

Accordingly, there is a need and desire for improvement in wireline conveyance modeling in wireline conveyance.

### SUMMARY

This disclosure pertains to systems and methods for enhancing wireline conveyance modeling in wireline conveyance using a physics-informed neural network (PINN).

Example embodiments of the present disclosure may include a computational model that combines a neural network and a numerical physical model to accurately simulate wireline conveyance jobs (e.g. surface tension responses during wireline conveyance). Embodiments may also update or re-train the model during job operation using data gathered from the job operation to improve the model.

A first aspect of this disclosure pertains to a method, including: receiving historical job data from at least one past wireline conveyance operation, the historical job data including: static input data, and timeseries input data, processing the historical job data through a neural network (NN) configured to learn the relationships between input features and target variables including: an input layer, a plurality of hidden layers, and an output layer, integrating the neural network with a numerical physical tension model to form a physics-informed neural network (PINN), training the PINN using the historical job data and estimation results of the physical model to enhance prediction accuracy, utilizing the trained PINN to predict at least one physical parameter for a current wireline conveyance operation, and outputting the predicted at least one physical parameter for use in the wireline conveyance operation.

A second aspect of this disclosure pertains to the method of the first aspect, and further includes planning the current wireline conveyance operation using the outputted predicted at least one physical parameter before the current wireline conveyance operation is started.

A third aspect of this disclosure pertains to the method of the first aspect, wherein the historical job data further includes timeseries input data from the current wireline conveyance operation.

A fourth aspect of this disclosure pertains to the method of the third aspect, and further includes: re-training the PINN using the historical job data including the timeseries input data from the current wireline conveyance operation and the estimation results of the physical model to further enhance prediction accuracy, utilizing the re-trained PINN to update a prediction for the at least one physical parameter for the current wireline conveyance operation, outputting the updated predicted at least one physical parameter, and adjusting the current wireline conveyance operation using the outputted updated predicted at least one physical parameter.

A fifth aspect of this disclosure pertains to the method of the first aspect, wherein the PINN includes a customizable weight ranging between a weight using only the neural network and a weight using only the physical model estimation results, and any weighted combination of the neural network and the physical model estimation results.

A sixth aspect of this disclosure pertains to the method of the first aspect, wherein the current wireline conveyance operation includes one or more of an open-hole well operation or a cased-hole well operation.

A seventh aspect of this disclosure pertains to the method of the first aspect, wherein the static input includes one or more of: a tool string property, a cable property, a well profile, a well geometry, a wellbore fluid property, a viscous mud property, or a restriction.

An eighth aspect of this disclosure pertains to the method of the first aspect, wherein the timeseries input includes one or more of: cable speed, cable length, pumping rate, or tractor force.

A ninth aspect of this disclosure pertains to the method of the first aspect, and further includes operating a standalone wireline conveyance predictor or a microservice in a wireline conveyance automation software according to the method.

A tenth aspect of this disclosure pertains to the method of the first aspect, and further includes performing the current wireline conveyance operation based on the outputted predicted at least one physical parameter.

An eleventh aspect of this disclosure pertains to a system, including: a processor, and a non-transitory computer-readable medium storing instructions that, when executed, cause the processor to: receive historical job data from at least one past wireline conveyance operation, the historical job data including: static input data, and timeseries input data, process the historical job data through a neural network (NN) configured to learn the relationships between input features and target variables including: an input layer, a plurality of hidden layers, and an output layer, integrate the neural network with a numerical physical tension model to form a physics-informed neural network (PINN), train the PINN using the historical job data and estimation results of the physical model to enhance prediction accuracy, utilize the trained PINN to predict at least one physical parameter for a current wireline conveyance operation, and output the predicted at least one physical parameter for use in the wireline conveyance operation.

A twelfth aspect of this disclosure pertains to the system of the eleventh aspect, wherein the instructions further cause the processor to plan the current wireline conveyance operation using the outputted predicted at least one physical parameter before the current wireline conveyance operation is started.

A thirteenth aspect of this disclosure pertains to the system of the eleventh aspect, wherein the historical job data further includes timeseries input data from the current wireline conveyance operation.

A fourteenth aspect of this disclosure pertains to the system of the thirteenth aspect, wherein the instructions further cause the processor to: re-train the PINN using the historical job data including the timeseries input data from the current wireline conveyance operation and the estimation results of the physical model to further enhance prediction accuracy, utilize the re-trained PINN to update a prediction for the at least one physical parameter for the current wireline conveyance operation, output the updated predicted at least one physical parameter, and adjust the current wireline conveyance operation using the outputted updated predicted at least one physical parameter.

A fifteenth aspect of this disclosure pertains to the system of the eleventh aspect, wherein the PINN includes a customizable weight ranging between a weight using only the neural network and a weight using only the physical model estimation results, and any weighted combination of the neural network and the physical model estimation results.

A sixteenth aspect of this disclosure pertains to the system of the eleventh aspect, wherein the current wireline conveyance operation includes one or more of an open-hole well operation or a cased-hole well operation.

A seventeenth aspect of this disclosure pertains to the system of the eleventh aspect, wherein the static input includes one or more of: a tool string property, a cable property, a well profile, a well geometry, a wellbore fluid property, a viscous mud property, or a restriction.

An eighteenth aspect of this disclosure pertains to the system of the eleventh aspect, wherein the timeseries input includes one or more of: cable speed, cable length, pumping rate, or tractor force.

A nineteenth aspect of this disclosure pertains to the system of the eleventh aspect, wherein the instructions further cause the processor to operate a standalone wireline conveyance predictor or a microservice in a wireline conveyance automation software according to the method.

A twentieth aspect of this disclosure pertains to the system of the eleventh aspect, wherein the instructions further cause the processor to perform the current wireline conveyance operation based on the outputted predicted at least one physical parameter.

This summary is provided to introduce a selection of concepts that are further described below in the detailed description. This summary is not intended to identify key or essential features of the claimed subject matter, nor is it intended to be used as an aid in limiting the scope of the claimed subject matter.

Additional features and advantages of embodiments of the disclosure will be set forth in the description which follows, and in part will be obvious from the description, or may be learned by the practice of such embodiments. The features and advantages of such embodiments may be realized and obtained by means of the instruments and combinations particularly pointed out in the appended claims. These and other features will become more fully apparent from the following description and appended claims or may be learned by the practice of such embodiments as set forth hereinafter.

### BRIEF DESCRIPTION OF DRAWINGS

To describe the manner in which the above-recited and other features of the disclosure can be obtained, a more particular description will be rendered by reference to specific implementations thereof which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example implementations, the implementations will be described and explained with additional specificity and detail through the use of the accompanying drawings in which:
FIG. 1 is a schematic of a wireline operation site according to a related art.
FIG. 2 is a physics-informed neural network (PINN) model input list in accordance with an example embodiment of the present disclosure.
FIG. 3 is a feature array for a neural network in accordance with an example embodiment of the present disclosure.
FIGs. 4A-4C are flow charts for a PINN process in accordance with an example embodiment of the present disclosure.
FIG. 5 is a diagram of a multilayer perceptron neural network (MLP NN) in accordance with an example embodiment of the present disclosure. Other types of NN can be used and depicted correspondingly.
FIG. 6 is a diagram of MLP NN training iterations in accordance with an example embodiment of the present disclosure. Other types of NN can be used and depicted correspondingly.
FIGs. 7A-7D are graphs corresponding to an experimental result in accordance with an example embodiment of the present disclosure.
FIGs. 8A-8C are graphs corresponding to training performance of an experimental result in accordance with an example embodiment of the present disclosure.
FIG. 9 is a graph corresponding to an experimental result in accordance with an example embodiment of the present disclosure.
FIGs. 10A-10C are graphs corresponding to training performance of an experimental result in accordance with an example embodiment of the present disclosure.
FIG. 11 illustrates certain components that may be included within a computer system according to an example embodiment of the present disclosure.

Before explaining the disclosed embodiment of this disclosure in detail, it is to be understood that the invention is not limited in its application to the details of the particular arrangement shown, as the invention is capable of other embodiments. Example embodiments are illustrated in referenced figures of the drawings. It is intended that the embodiments and figures disclosed herein are to be considered illustrative rather than limiting. Also, the terminology used herein is for the purpose of description and not of limitation.

### DETAILED DESCRIPTION

While the subject disclosure applies to embodiments in many different forms, there are shown in the drawings and will be described in detail herein specific embodiments with the understanding that the present disclosure is an example of the principles of the invention. It is not intended to limit the invention to the specific illustrated embodiments. The features of the invention disclosed herein in the description, drawings, and claims can be significant, both individually and in any desired combinations, for the operation of the invention in its various embodiments. Features from one embodiment can be used in other embodiments of the invention. In the description of the drawings, like reference numerals refer to like elements.

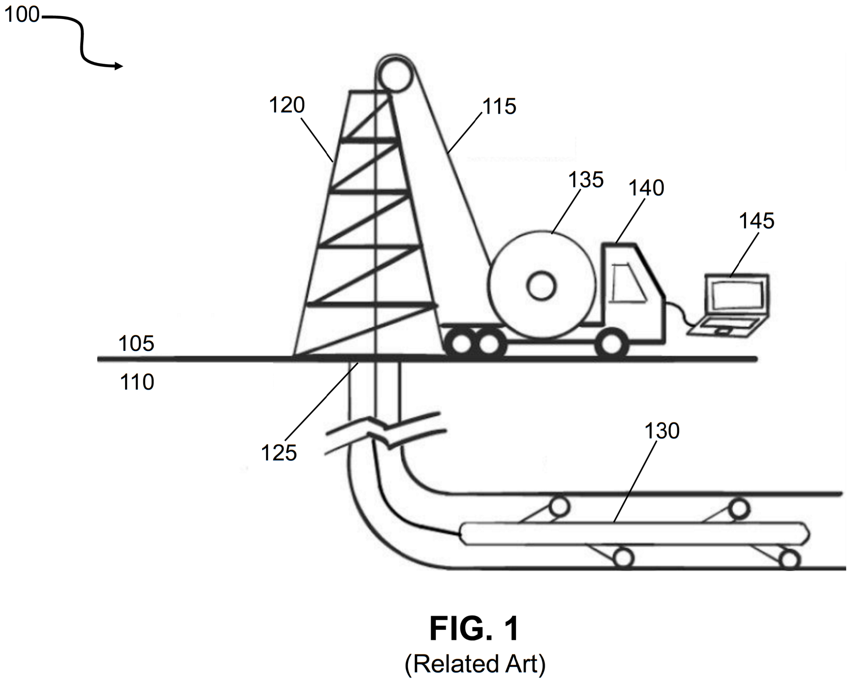

FIG. 1 is a schematic of a wireline operation site according to a related art.

A wireline operation site 100 may be generally divided into surface (also referred to as "uphole," "above-ground," etc.) 105 locations and subsurface (also referred to as "downhole," "below-ground," etc.) 110 locations. A wireline 115 may be fed through a rig 120 on the surface 105 to a well 125 that penetrates into the subsurface 110. A tool (or tool string) 130 may be attached to and operated via the wireline 115. The wireline 115 may be fed from a winch 135, which may be mounted on a platform or other surface, e.g., a truck 140. Surface equipment 145 may control the winch, the tool or tool string, or any other element that is computer-controlled. Accurate prediction of physical parameters, such as surface tension of the wireline 115, head tension of the wireline 115, and/or sticking force of the wireline 115, is necessary for correct interpretation of the movement of the tool string through the well during wireline conveyance operations.

During a wireline conveyance operation (or job), accurately interpreting tool string dynamics in the well is important for a safe and efficient operation. Surface tension, among other parameters, is a very important signal for interpreting tool string movements. Therefore, predicting the entire surface tension profile of an upcoming wireline conveyance job (e.g., pre-job simulation) is needed for the design and planning of the job. Additionally, predicting the surface tension profile of an ongoing wireline conveyance job (e.g., real-time continuous simulation) is useful for timely adjustments during the wireline conveyance operation, e.g., in cable speed, tool attachment, tool operation, etc. Therefore, there is a significant need for a model that accurately simulates at least one physical wireline conveyance parameter, especially surface tension, head tension, and/or sticking force, given the wireline job configurations.

While a physical model may be capable of generally computing physical parameters, such as surface tension, head tension, and/or sticking force, in wireline conveyance jobs, because wireline conveyance is a multi-physics process, it is infeasible to fully capture it with a physical model alone. Furthermore, many downhole parameters, such as friction coefficients, centralizer drag, and mud viscosity, are unknown before a job begins, which leads to high uncertainty in the predictions of the physical model.

Example embodiments of the present disclosure include a physics-informed neural network (PINN) model that uses historical job data combined with a physical wireline conveyance model to accurately simulates wireline conveyance process for planning and executing a wireline conveyance project, e.g., a well-logging or perforation operation. The PINN model is currently tuned to predict surface tension. However, with minimal adjustments and additional data, it can be adapted to predict other parameters, such as head tension, open-hole sticking probability, conveyance time, and the effects of temperature and pressure gradients. The PINN model may include a neural network (NN), for example, a multilayer perceptron neural network (MLP NN) or other neural network architectures, such as a recurrent neural network (RNN) or a gated recurrent unit (GRU). These are nonlimiting examples of NNs that may be used in accordance with example embodiments of the present disclosure.

An MLP NN is a type of artificial neural network that includes multiple layers of neurons, typically including one input layer, multiple hidden layers, and one output layer. Each neuron in these layers is fully connected to all neurons in the previous and subsequent layers. The neurons use nonlinear activation functions, which allow the network to capture complex relationships in the data it processes.

Embodiments may employ an MLP NN or another type of NN that includes, for example, one input layer, three hidden layers, and one output layer. Example inputs may include one or more of: tool string and cable properties, well profile and well geometry, e.g., of arbitrary complexity, wellbore fluid properties, and/or current cable speed and length. The employed NN is integrated with a physics-based wireline conveyance model (or "physical model"), forming a "physics-informed" neural network. This integration enriches the training process by combining outputs from the physical model with historical job data, effectively compensating for potential inaccuracies in measurements and increasing the tolerance to input parameter uncertainty. This approach ensures a more robust and reliable simulation of wireline conveyance than the traditional approach that uses only a physics-based tension model or physical model without the neural network of embodiments of the present disclosure.

To train and validate an experimental PINN model created according to an example embodiment of the present disclosure, a sample historical job dataset was employed that included data from multiple wireline trips within the same well, and was further complicated by pumpdown stages. The sample dataset, which was characterized by complex surface tension responses, posed a substantial challenge for the physical model to accurately replicate the measured tension, even after extensive algorithmic parameter tuning. Numerical results indicate the PINN model's superior accuracy in wireline conveyance simulation, indicated by the surface tension prediction, compared to the physical model, even when trained with data from a single trip. The prediction accuracy further improved as additional, carefully selected trip data from the same well were incorporated into the training set, enhancing its representativeness. These findings suggest that the developed PINN model, when pre-trained with relevant historical data, robustly simulates future wireline conveyance jobs.

The experimental results demonstrate that, although the traditional physics-based model may be fundamental, it reaches a plateau in predictive accuracy when attempting to adapt to real-world scenarios of elevated complexity. In contrast, the implementation of hybrid modeling through PINN effectively overcomes these limitations, substantially augmenting the model's predictive capabilities.

The PINN model according to embodiments of the present disclosure innovatively simulates complex jobs by fusing data-driven and physical approaches, thereby enhancing prediction accuracy. By relying on data, it eliminates the dependency on uncertain inputs for the physics-based model. The improved accuracy offers a competitive advantage by ensuring more reliable design, efficient execution, and accurate risk estimation. Furthermore, the model's adaptability to various job configurations and its ability to simulate a range of conveyance scenarios enable broader application through precise tuning across diverse basins. The approach, according to embodiments of the present disclosure, is especially vital for modern complex reservoirs utilizing various conveyance methods in a single job.

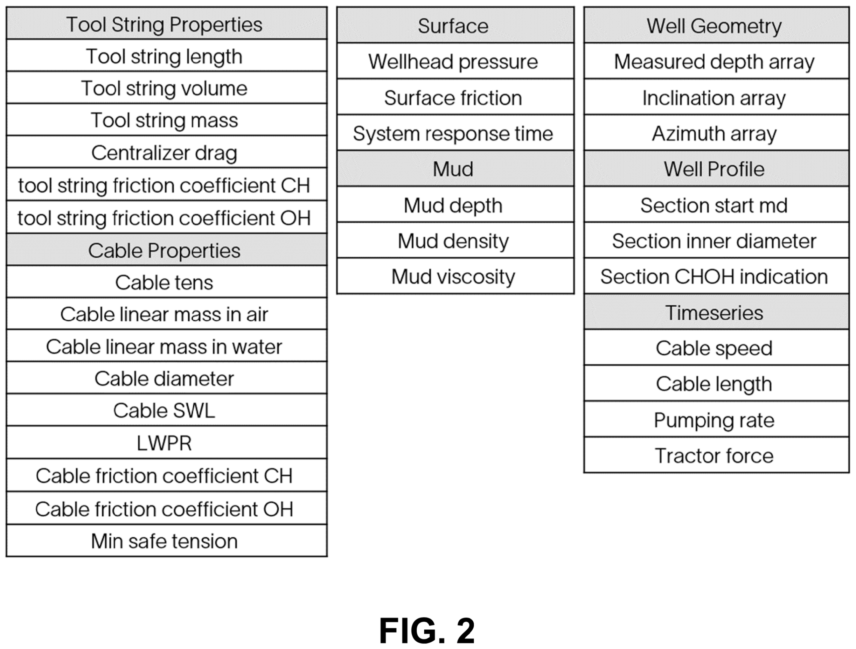

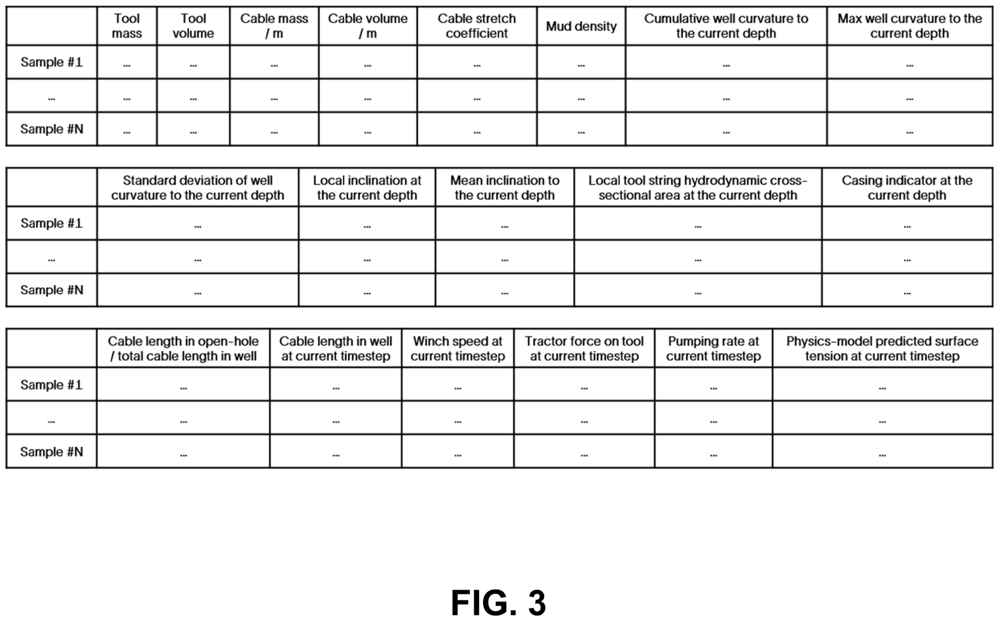

FIG. 2 is a physics-informed neural network (PINN) model input list in accordance with an example embodiment of the present disclosure. FIG. 3 is a feature array for a neural network in accordance with an example embodiment of the present disclosure.

FIG. 2 shows an example of a list of PINN model inputs applicable to historical, current, and upcoming wireline conveyance jobs. Timeseries data (e.g., cable speed, cable length, pumping rate, and tractor force) may be input as a timeseries for the entire job at a fixed frequency (e.g., one set of values per second). Other inputs (either in scalar or array form) may remain unchanged during a job and may provide context. A user may input the parameters in FIG. 2, which the physical model may then use as provided. "CH" refers to cased-hole, and "OH" refers to open-hole. "Cable SWL" refers to the safe working load of the cable, which is the maximum tension that can be exerted on the cable. "LWPR" refers to a lower weak point rating, which is the strength of the connection between the cable and tool string. "System response time" refers to the time needed for a winch operation input (e.g., stopping the winch) to actually take effect on winch motion. The NN component in the PINN model has its own feature list derived from the raw user inputs, as shown in FIG. 3.

A user can either input the timeseries inputs as a timeseries format, e.g., a list containing their values at each timestep of the job, or as an abstract job profile. An abstract job profile may include parameter values at certain depths and the target depth. For example, a job profile may state, "cable speed of 1 m/s until depth of 500 m, then change to 1.5 m/s until depth of 2000 m, then change to 1 m/s until the target depth." This format may also apply to a pumping rate and/or a tractor force. The model may then generate timeseries inputs based on the user-input job profile. Cable length may be calculated as an integral of cable speed over time. Users may not need to separately input run in hole (RIH) and pull out of the hole (POOH) periods of a job. Instead, they may indicate winch direction, e.g., by the sign of cable speed, for example, positive for RIH and negative for POOH.

The raw model output may be the predicted physical parameters, e.g., surface tension, head tension, and/or sticking force, in timeseries form. When cable length is also in timeseries form, the model can output parameters as either a function of time or depth. The frequency of the output parameter timeseries matches that of the input timeseries parameters.

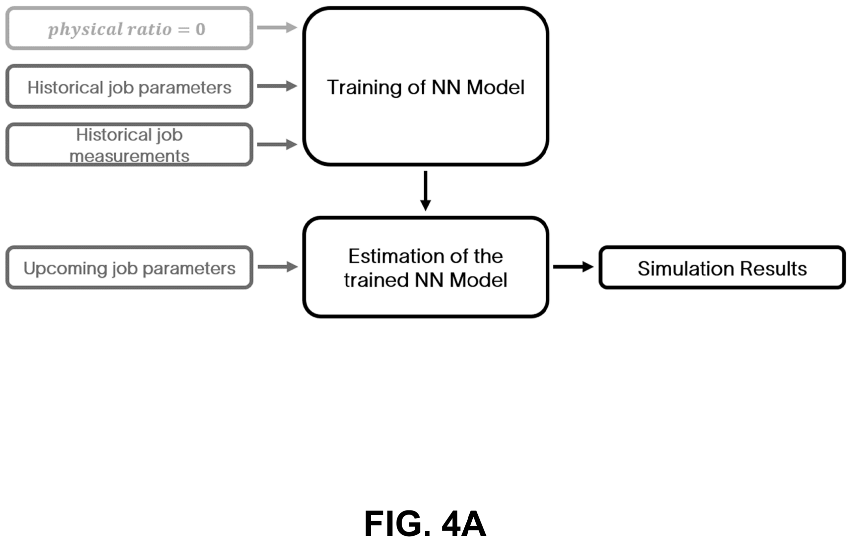

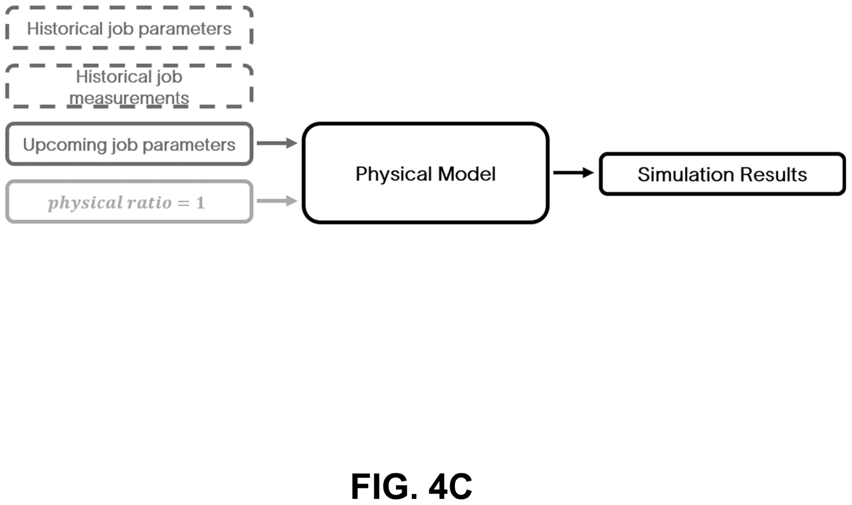

FIGs. 4A-4C are flow charts for a PINN process in accordance with an example embodiment of the present disclosure.

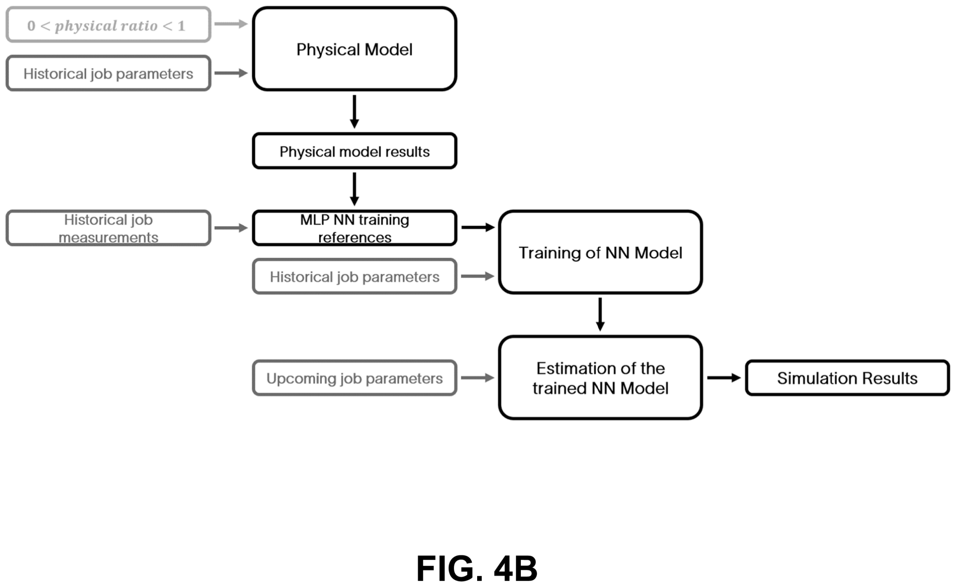

FIGs. 4A-4C show general flow charts for the PINN process. The "physical ratio" input represents the weight of the physical model. A "physical ratio" input of '0', as shown in FIG. 4A, means that the PINN output will be purely data-driven by the historical job data without the impact of physical model results. A "physical ratio" input of '1', as shown in FIG. 4A, means that the PINN output will be based solely on the physical model results without the impact of historical job data, or may be used when historical job data is unavailable. FIG. 4B shows the process when the "physical ratio" input is between '0' and '1', e.g., 0 < physical ratio < 1, which means that the PINN output is both data-driven by the historical job measurements and based on the physical model results, with the weight given to the historical job data versus the physical model results being determined by the "physical ratio" input. A higher "physical ratio" input would use a higher proportion of the physical model results in training the NN, while a lower "physical ratio" input would use a higher proportion of the historical job data in training the NN.

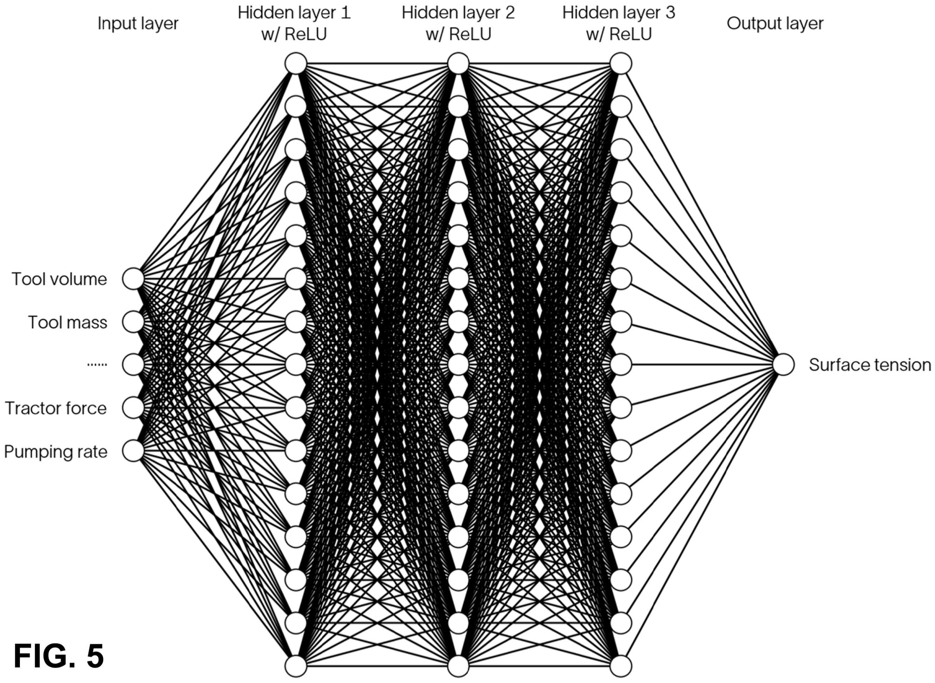

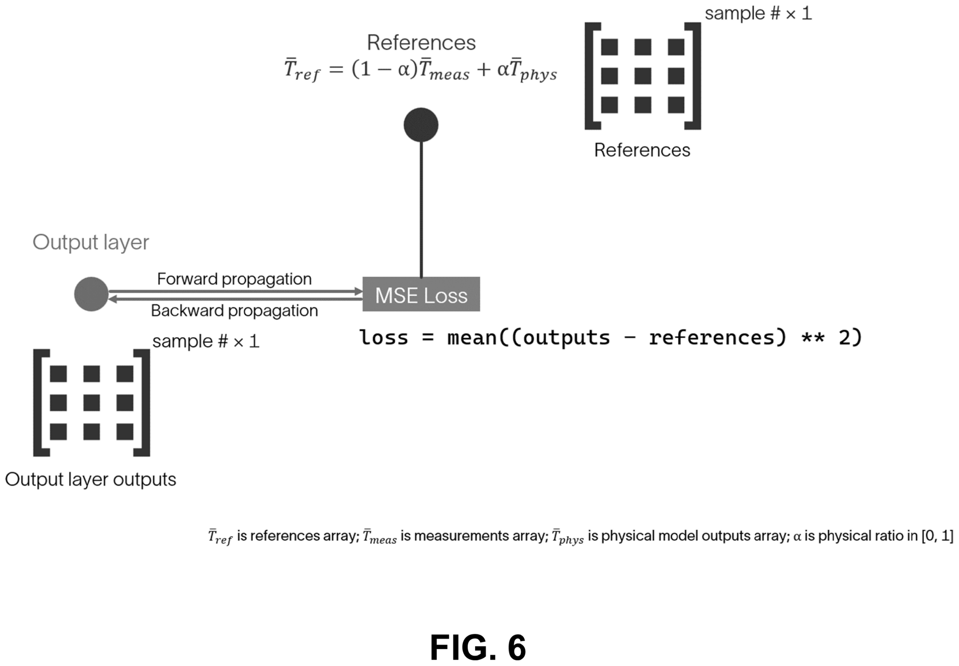

FIG. 5 is a diagram of a multilayer perceptron neural network (MLP NN) design in accordance with an example embodiment of the present disclosure. FIG. 6 is a diagram of MLP NN training iterations in accordance with an example embodiment of the present disclosure. Other types of NN can be used and depicted correspondingly.

FIG. 5 shows an example of an MLP NN structure used in a PINN model according to an example embodiment to predict surface tension. FIG. 6 shows an example of MLP NN training iteration operations. Other types of NN can be used and depicted correspondingly. ANN according to an example embodiment may have a different number of outputs and/or inputs as needed for the model. For example, more outputs and more inputs may be provided, e.g., to predict conveyance risks or downhole head tension. In an example embodiment, an initial NN may be updated later to add more inputs and/or outputs, e.g., to provide an updated dataset including additional parameters not included in the initial model. One iteration (or epoch) may include one forward and one back propagation, which may conduct one round of weights and biases update. The number of epochs may be customizable by a user. As an example, the number of epochs may be between 100 and 1000 iterations.

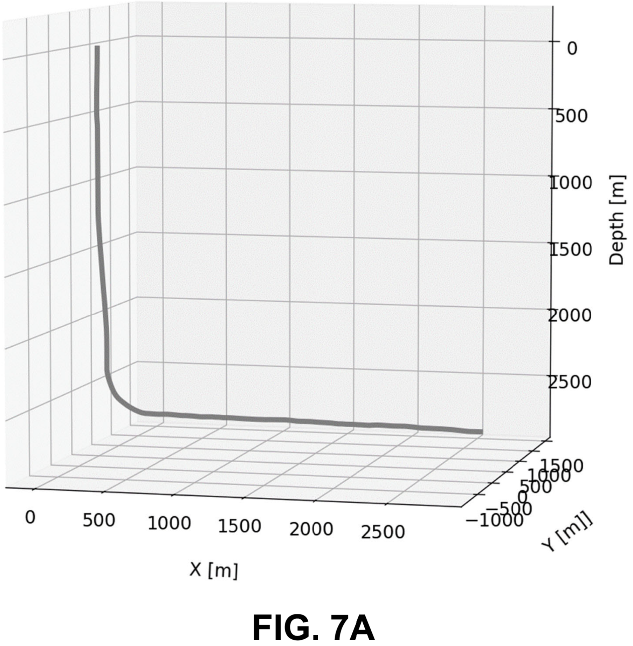

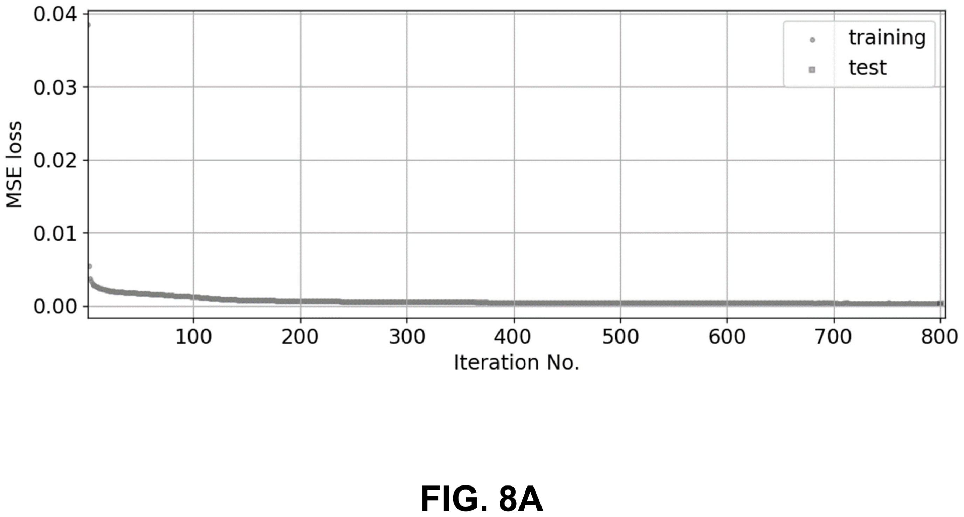

FIGs. 7A-7D are graphs corresponding to an experimental result in accordance with an example embodiment of the present disclosure. FIGs. 8A-8C are graphs corresponding to training performance of an experimental result in accordance with an example embodiment of the present disclosure.

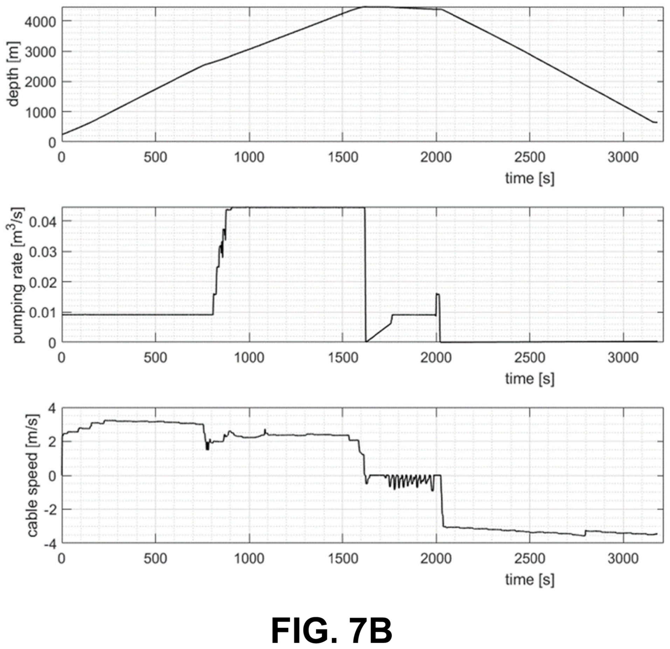

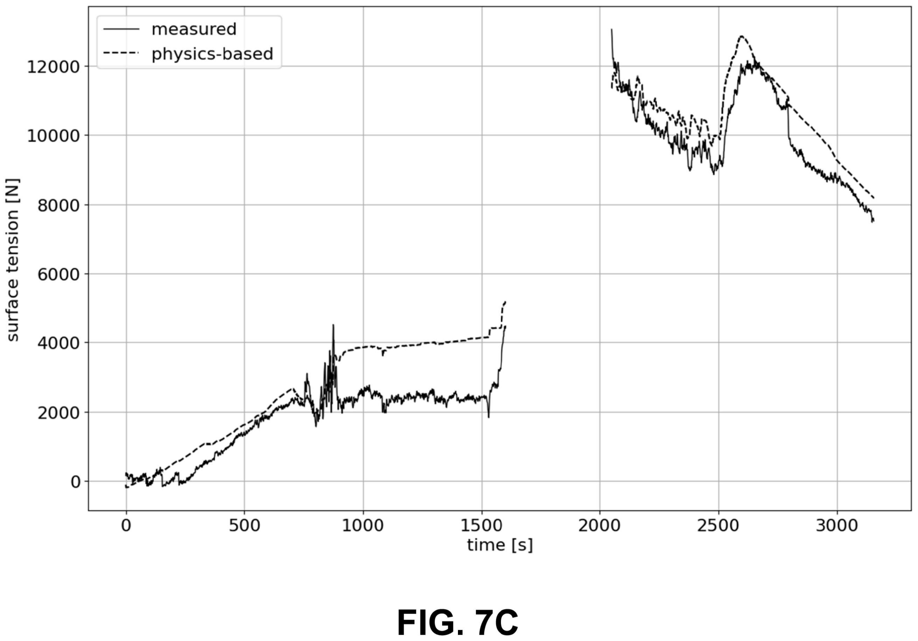

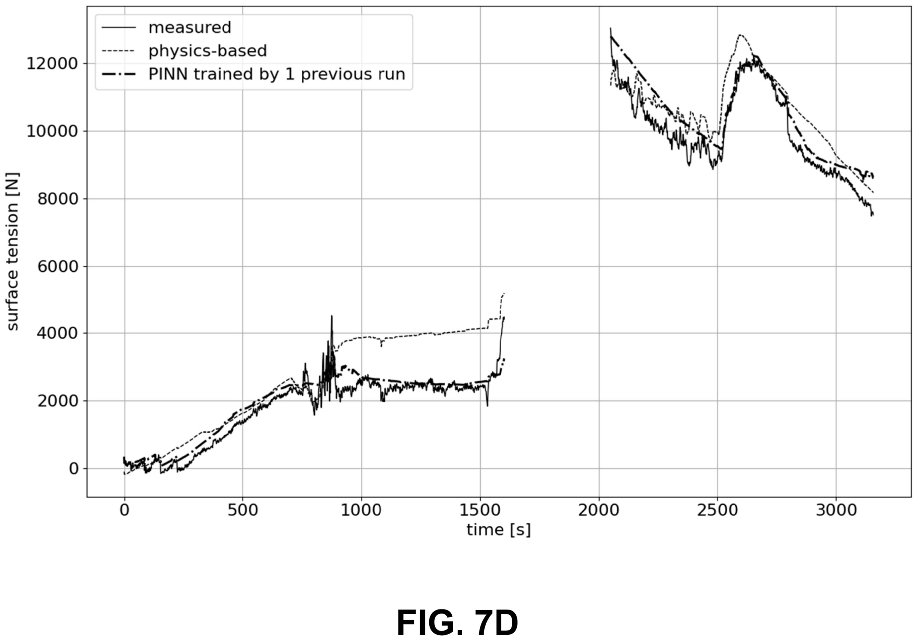

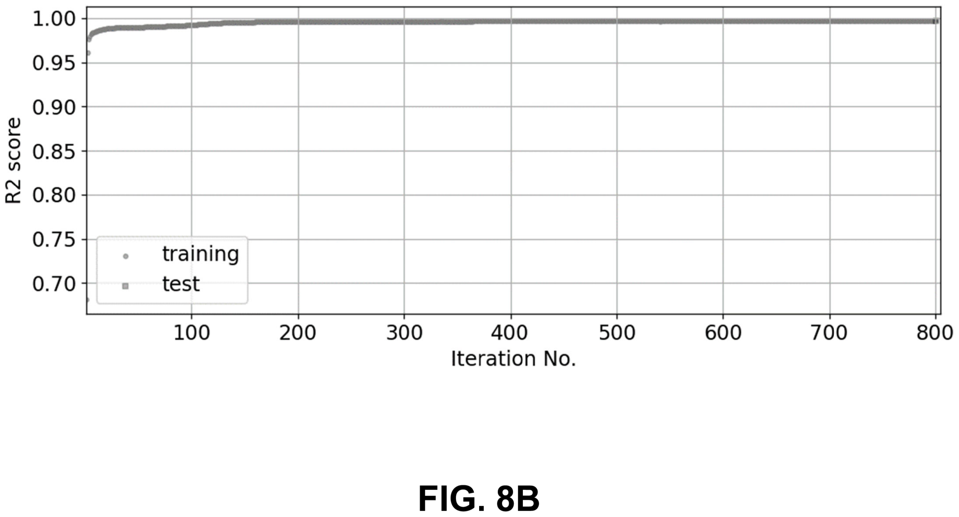

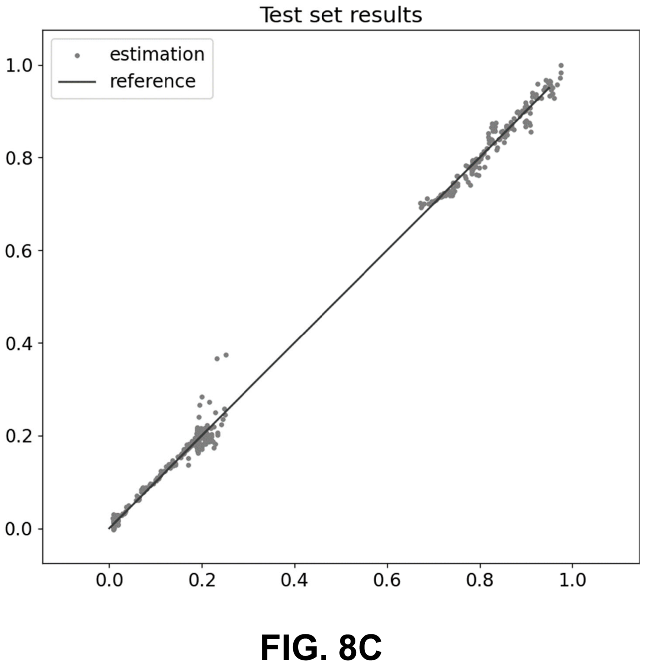

FIGs. 7A-7D show an example result of the developed PINN for a pumpdown perforation job in a horizontal well. FIG. 7A illustrates the wellbore geometry. FIG. 7B shows the timeseries data inputs, including cable speed, cable length (e.g., depth), and pumping rate. FIG. 7C compares the pure physical model results with the actual measured surface tension shown in pound-force (lbf). The surface tension prediction between 1605 s and 2050 s is omitted, as the tool string was stationary at its target depth during this period, which is outside the scope of wireline conveyance. The discrepancy between the surface tension prediction by the physical model and the measured surface tension is satisfactory for most of the job. However, during the period when the tool string was conveyed in the horizontal segment of the well, where the wireline job is complicated by the active pumpdown, the discrepancy between the two increases significantly and exceeds the acceptable range. FIG. 7D illustrates the PINN results alongside the pure physical model results and actual surface tension measurements. The PINN was trained using one previous run in the same well. Training performance is illustrated in FIGs. 8A-8C, which shows experimental results of the PINN model. The results demonstrate that the PINN model outperforms the physical model, particularly during the active pumpdown period, which involves complex physics, and can accurately predict surface tension using relevant historical job data. In FIGs. 8A-8C, training performance of the experimental PINN is shown in which FIG. 8A shows mean square error (MSE) compared to iterations (number of epochs), FIG. 8B shows the R² (coefficient of determination score) as compared to iterations, and FIG. 8C shows estimation results compared to a reference of the test dataset.

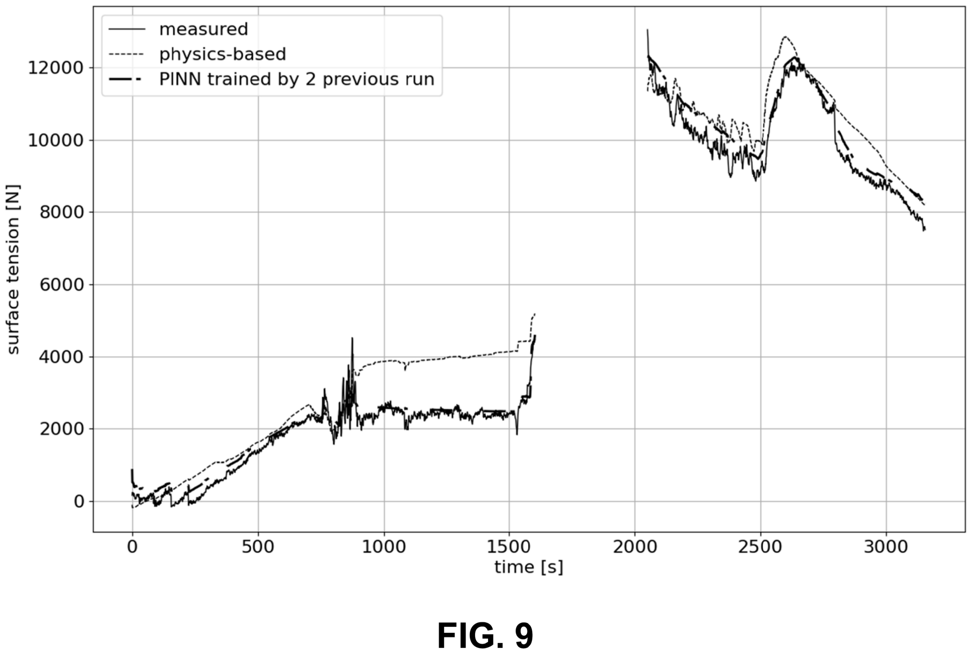

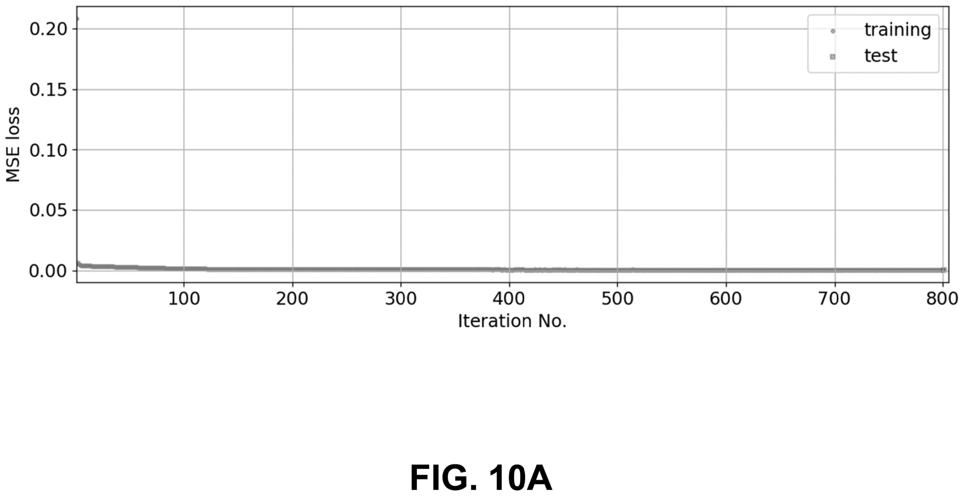

FIG. 9 is a graph corresponding to an experimental result in accordance with an example embodiment of the present disclosure. FIGs. 10A-10C are graphs corresponding to training performance of an experimental result in accordance with an example embodiment of the present disclosure.

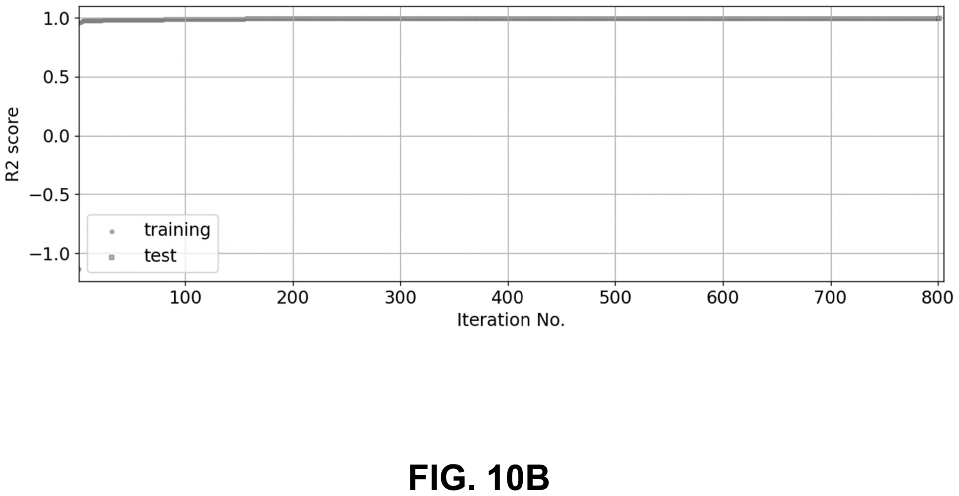

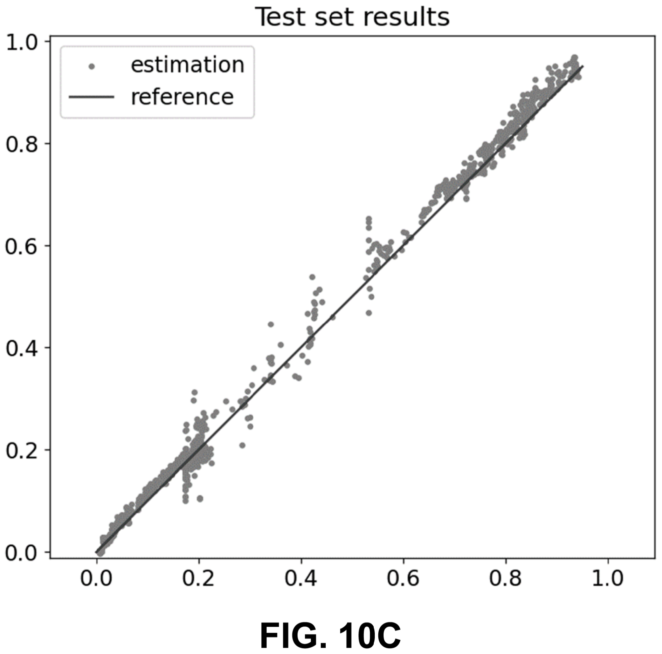

FIG. 9 shows an experimental PINN model prediction of the same job, but the PINN was trained using two previous runs instead of only one previous run, e.g., with updated historical job data. The result shows that, with a larger training dataset, the PINN may further improve the accuracy of the surface tension prediction. FIGs. 10A-10C show the training performance of the experimental PINN model with data from two previous runs. The results indicate that, with a larger relevant training dataset, the MSE decreases (FIG. 10A) and the R² score increases (FIG. 10B) more rapidly with each iteration. FIG. 10C shows estimation results compared to a reference of the test dataset.

Embodiments of the present disclosure may include predicting a surface tension in a wireline cable, and other wireline conveyance process variables as a function of depth or timeseries. The prediction may be performed pre-job, e.g., using historical job data, to help determine parameters to be used during the job operation, risk assessments, and other planning needs. The prediction may also be updated during the job, for example, using actual measured data from the job. Example embodiments may include training the PINN on datasets from past historical jobs, e.g., in similar oil and/or gas fields, jobs and equipment configurations (e.g., surface, inside-the-well, downhole), and/or from historic jobs in the same well (e.g., previous runs). Example embodiments may include re-training or updating the PINN using real-time data obtained during the job.

Training and "next job" configuration datasets may include, for example, information about the physical properties of the well, reservoir, fluids, cable properties, toolstring geometry and weights (e.g., in the context of the job). The PINN may further incorporate physics-based models of the cable, the tool sting, and their interactions with the well, fluids, etc. to inform the neural network's architecture and loss function (e.g., reference).

The PINN may be trained, for example, using a combination of a) supervised, and b) physics-based constraints to improve tension prediction accuracy for complicated well geometries and heavier fluids. For example, the training may include datasets related to both conventional and unconventional oil extraction methods. This may include the exploration and production techniques associated with "easy oil" - characterized by relatively straightforward and cost-effective extraction processes, and "non-easy oil," which involves more complex and challenging extraction scenarios, such as deepwater drilling, tight oil, or heavy oil reservoirs. The technique according to example embodiments may address technological and operational considerations necessary for successful predictions in these diverse environments.

Predictions of the PINN may be validated using actual job outcomes, e.g., either on-the-job or post-job, and the model may be iteratively refined and fine-tuned. "On-the-job" may involve human-in-the-loop data for additional labeling of "interesting" job events (e.g., stick-and-slip, cable slack, etc.) to improve model's fit-per-basin and possible global generalization, fit-per-well-type, etc. PINNs may be targeted to more intricate jobs (e.g., high corkscrew wells, viscous mud, etc. Once a dictionary of labels is representative enough, an automated system may label events, e.g., without the need of a human subject matter expert. The events may be incorporated into the PINN. Embodiments may be designed to handle missing or incomplete data from past jobs while still providing reliable predictions, e.g., via an extra layer of inferencing or optimization techniques.

Embodiments may include a cyber-physical system, which may include sensors, computer(s), and communication capabilities for wireline conveyance jobs, which may utilize a) a PINN trained on historical data and physics-based knowledge, and b) a processing module for inputting new environmental data and a pre-job configuration and outputting predictions.

Example embodiments may be extended for downhole head tension pre-job calculation and for the estimation of conveyance risks, such as cable slack, pull-off, sticking, etc. Example embodiments may be extended to wireline intervention jobs (e.g., a cased hole), for example, for detecting tension anomalies or process quality in plug setting or shifting jobs, and beyond. A PINN model according to an example embodiment may capture interactions of tools with the formation or casing via anticipated changes in tension profile. Example embodiments of a PINN may be include inputs related to formation sampling tools (e.g., open hole) with tension modeling for controlled "sticking" while taking fluid samples.

Example embodiments of a PINN may be optimized for predicting pre-job parameters, which may include careful selection of data features based on the specific characteristics of the area, e.g., an oil and/gas field/basin, which may include categorical data, lithography/rock, reservoir, and other data (e.g., cable, casing material, well fluids, etc.). Data sources may include, for example, sensor data from past jobs, geological data, and/or non-wireline data, such as drilling info, well pressure test info. Data sources can be online, offline, on-the-job, cloud-based, and/or on-premises. Pre-job parameters may include safety and operational metrics.

A software product for the PINN according to an example embodiment may be implemented in different modes. For example, it may be implemented as a stand-alone application, as a cloud-based application, or may be web-browser-based. The software may be designed as a monolithic application or developed using a microservice architecture. The software may be embeddable into other products such as field-tech training room system, or Wireline truck emulator, or hardware/software in the loop system. The software may be implemented on a non-transitory computer-readable medium that, when executed, causes a processor to execute instructions of the software. An example processor may adjust predictions based on real-time data received during the job.

Execution of the PINN may be performed, for example, pre-job, run-time, and/or hardware-in-the-loop testing. The operation may be scalable to varying computational performance platforms. Example embodiments may be further integrated into a wireline tool planner, into an expert wireline system (e.g., an artificial intelligence (AI)/expert system or an AI bot), and/or a cross-technology enterprise business-decision making system.

Therefore, example embodiments of the present disclosure may include a computer-implemented method for wireline conveyance modeling before or during a wireline conveyance job, including: receiving historical and new job data, including static input, such as tool string and cable properties, well profile and geometry, and wellbore fluid properties, and timeseries input, such as cable speed and cable length, processing the historical job data through a neural network (NN) comprising input layer, hidden layers, and output layer, integrating the NN with a numerical physical wireline conveyance model to form a physics-informed neural network (PINN), training the PINN using a combined reference of historical job measurements and physical model estimation results to enhance prediction accuracy, utilizing the trained PINN to predict wireline conveyance parameters, e.g., surface tension, head tension, and/or sticking force, for new wireline conveyance jobs, and visualizing and outputting the predicted parameters for use in planning and executing the wireline conveyance job.

Example embodiments of the present disclosure may include a non-transitory computer-readable medium containing instructions that, when executed by a processor, perform operations of the method(s). Example embodiments of the present disclosure may further include a system that performs the operations of the method(s) and/or includes a non-transitory computer-readable medium that, when executed by a processor, perform the operations of the method(s).

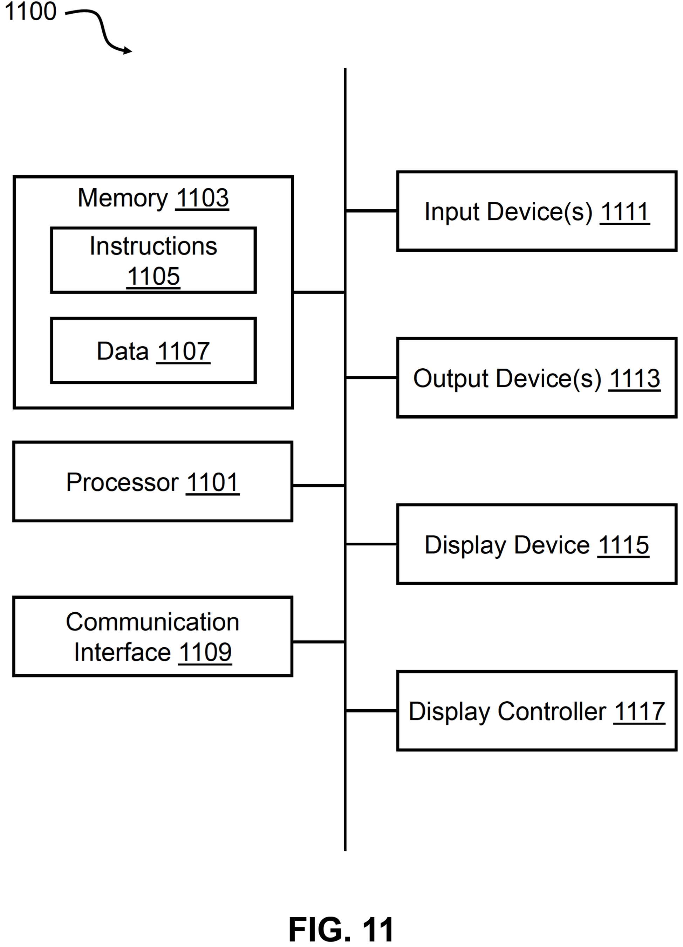

FIG. 11 illustrates certain components that may be included within a computer system according to an example embodiment of the present disclosure.

FIG. 11 illustrates certain components that may be included within a computer system 1100, which may be used for embodiments of the present disclosure, including, for example, generation and/or use of an example PINN model and/or the surface equipment 145 of FIG. 1. One or more computer systems 1100 may be used to implement the various devices, components, and systems described herein.

The computer system 1100 includes a processor 1101. The processor 1101 may be a general-purpose single- or multi-chip microprocessor (e.g., an Advanced RISC (Reduced Instruction Set Computer) Machine (ARM)), a special-purpose microprocessor (e.g., a digital signal processor (DSP)), a microcontroller, a programmable gate array, etc. The processor 1101 may be referred to as a central processing unit (CPU). Although just a single processor 1101 is shown in the computer system 1100 of FIG. 11, in an alternative configuration, a combination of processors (e.g., an ARM and DSP) could be used. In one or more embodiments, the computer system 1100 further includes one or more graphics processing units (GPUs), which can provide processing services related to both entity classification and graph generation.

The computer system 1100 also includes memory 1103 in electronic communication with the processor 1101. The memory 1103 may be any electronic component capable of storing electronic information. For example, the memory 1103 may be embodied as random access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM) memory, registers, and so forth, including combinations thereof.

Instructions 1105 and data 1107 may be stored in the memory 1103. The instructions 1105 may be executable by the processor 1101 to implement some or all of the functionality disclosed herein. Executing the instructions 1105 may involve the use of the data 1107 that is stored in the memory 1103. Any of the various examples of modules and components described herein may be implemented, partially or wholly, as instructions 1105 stored in memory 1103 and executed by the processor 1101. Any of the various examples of data described herein may be among the data 1107 that is stored in memory 1103 and used during execution of the instructions 1105 by the processor 1101.

A computer system 1100 may also include one or more communication interfaces 1109 for communicating with other electronic devices. The communication interface(s) 1109 may be based on wired communication technology, wireless communication technology, or both. Some examples of communication interfaces 1109 include a Universal Serial Bus (USB), an Ethernet adapter, a wireless adapter that operates in accordance with an Institute of Electrical and Electronics Engineers (IEEE) 802.11 wireless communication protocol, a Bluetooth^{®} wireless communication adapter, and an infrared (IR) communication port.

A computer system 1100 may also include one or more input devices 1111 and one or more output devices 1113. Some examples of input devices 1111 include a keyboard, mouse, microphone, remote control device, button, joystick, trackball, touchpad, and lightpen. Some examples of output devices 1113 include a speaker and a printer. One specific type of output device that is typically included in a computer system 1100 is a display device 1115. Display devices 1115 used with embodiments disclosed herein may utilize any suitable image projection technology, such as liquid crystal display (LCD), light-emitting diode (LED), gas plasma, electroluminescence, or the like. A display controller 1117 may also be provided, for converting data 1107 stored in the memory 1103 into text, graphics, and/or moving images (as appropriate) shown on the display device 1115.

The various components of the computer system 1100 may be coupled together by one or more buses, which may include a power bus, a control signal bus, a status signal bus, a data bus, etc. For the sake of clarity, the various buses are illustrated in FIG. 11 as a bus system 1119.

Following are sections in accordance with at least one embodiment of the present disclosure:
Clause 1: A method, including: receiving historical job data from at least one past wireline conveyance operation, the historical job data including: static input data, and timeseries input data, processing the historical job data through a neural network (NN) configured to learn the relationships between input features and target variables including: an input layer, a plurality of hidden layers, and an output layer, integrating the neural network with a numerical physical tension model to form a physics-informed neural network (PINN), training the PINN using the historical job data and estimation results of the physical model to enhance prediction accuracy, utilizing the trained PINN to predict at least one physical parameter for a current wireline conveyance operation, and outputting the predicted at least one physical parameter for use in the wireline conveyance operation.
Clause 2: The method of clause 1, further including planning the current wireline conveyance operation using the outputted predicted at least one physical parameter before the current wireline conveyance operation is started.
Clause 3: The method of clause 1, wherein the historical job data further includes timeseries input data from the current wireline conveyance operation.
Clause 4: The method of clause 3, further including: re-training the PINN using the historical job data including the timeseries input data from the current wireline conveyance operation and the estimation results of the physical model to further enhance prediction accuracy, utilizing the re-trained PINN to update a prediction for the at least one physical parameter for the current wireline conveyance operation, outputting the updated predicted at least one physical parameter, and adjusting the current wireline conveyance operation using the outputted updated predicted at least one physical parameter.
Clause 5: The method of clause 1, wherein the PINN includes a customizable weight ranging between a weight using only the neural network and a weight using only the physical model estimation results, and any weighted combination of the neural network and the physical model estimation results.
Clause 6: The method of clause 1, wherein the current wireline conveyance operation includes one or more of an open-hole well operation or a cased-hole well operation.
Clause 7: The method of clause 1, wherein the static input includes one or more of: a tool string property, a cable property, a well profile, a well geometry, a wellbore fluid property, a viscous mud property, or a restriction.
Clause 8: The method of clause 1, wherein the timeseries input includes one or more of: cable speed, cable length, pumping rate, or tractor force.
Clause 9: The method of clause 1, further including operating a standalone wireline conveyance predictor or a microservice in a wireline conveyance automation software according to the method.
Clause 10: The method of clause 1, further including performing the current wireline conveyance operation based on the outputted predicted at least one physical parameter.
Clause 11: A system, including: a processor, and a non-transitory computer-readable medium storing instructions that, when executed, cause the processor to: receive historical job data from at least one past wireline conveyance operation, the historical job data including: static input data, and timeseries input data, process the historical job data through a neural network (NN) configured to learn the relationships between input features and target variables including: an input layer, a plurality of hidden layers, and an output layer, integrate the neural network with a numerical physical tension model to form a physics-informed neural network (PINN), train the PINN using the historical job data and estimation results of the physical model to enhance prediction accuracy, utilize the trained PINN to predict at least one physical parameter for a current wireline conveyance operation, and output the predicted at least one physical parameter for use in the wireline conveyance operation.
Clause 12: The system of clause 11, wherein the instructions further cause the processor to plan the current wireline conveyance operation using the outputted predicted at least one physical parameter before the current wireline conveyance operation is started.
Clause 13: The system of clause 11, wherein the historical job data further includes timeseries input data from the current wireline conveyance operation.
Clause 14: The system of clause 13, wherein the instructions further cause the processor to: re-train the PINN using the historical job data including the timeseries input data from the current wireline conveyance operation and the estimation results of the physical model to further enhance prediction accuracy, utilize the re-trained PINN to update a prediction for the at least one physical parameter for the current wireline conveyance operation, output the updated predicted at least one physical parameter, and adjust the current wireline conveyance operation using the outputted updated predicted at least one physical parameter.
Clause 15: The system of clause 11, wherein the PINN includes a customizable weight ranging between a weight using only the neural network and a weight using only the physical model estimation results, and any weighted combination of the neural network and the physical model estimation results.
Clause 16: The system of clause 11, wherein the current wireline conveyance operation includes one or more of an open-hole well operation or a cased-hole well operation.
Clause 17: The system of clause 11, wherein the static input includes one or more of: a tool string property, a cable property, a well profile, a well geometry, a wellbore fluid property, a viscous mud property, or a restriction.
Clause 18: The system of clause 11, wherein the timeseries input includes one or more of: cable speed, cable length, pumping rate, or tractor force.
Clause 19: The system of clause 11, wherein the instructions further cause the processor to operate a standalone wireline conveyance predictor or a microservice in a wireline conveyance automation software according to the method.
Clause 20: The system of clause 11, wherein the instructions further cause the processor to perform the current wireline conveyance operation based on the outputted predicted at least one physical parameter.

Systems and software, e.g., implemented on a non-transitory computer-readable medium, for performing the methods discussed herein are also within the scope of embodiments of the present disclosure.

Embodiments of the present disclosure may thus utilize a special purpose or general-purpose computing system including computer hardware, such as, for example, one or more processors and system memory. Embodiments within the scope of the present disclosure also include physical and other computer-readable media for carrying or storing computer-executable instructions and/or data structures, including applications, tables, data, libraries, or other modules used to execute particular functions or direct selection or execution of other modules. Such computer-readable media can be any available media that can be accessed by a general purpose or special purpose computer system. Computer-readable media that store computer-executable instructions (or software instructions) are physical storage media. Computer-readable media that carry computer-executable instructions are transmission media. Thus, by way of example, and not limitation, embodiments of the present disclosure can include at least two distinctly different kinds of computer-readable media, namely physical storage media or transmission media. Combinations of physical storage media and transmission media should also be included within the scope of computer-readable media.

Both physical storage media and transmission media may be used temporarily store or carry, software instructions in the form of computer readable program code that allows performance of embodiments of the present disclosure. Physical storage media may further be used to persistently or permanently store such software instructions. Examples of physical storage media include physical memory (e.g., RAM, ROM, EPROM, EEPROM, etc.), optical disk storage (e.g., CD, DVD, HDDVD, Blu-ray, etc.), storage devices (e.g., magnetic disk storage, tape storage, diskette, etc.), flash or other solid-state storage or memory, or any other non-transmission medium which can be used to store program code in the form of computer-executable instructions or data structures and which can be accessed by a general purpose or special purpose computer, whether such program code is stored as or in software, hardware, firmware, or combinations thereof.

A "network" or "communications network" may generally be defined as one or more data links that enable the transport of electronic data between computer systems and/or modules, engines, and/or other electronic devices. When information is transferred or provided over a communication network or another communications connection (either hardwired, wireless, or a combination of hardwired or wireless) to a computing device, the computing device properly views the connection as a transmission medium. Transmission media can include a communication network and/or data links, carrier waves, wireless signals, and the like, which can be used to carry desired program or template code means or instructions in the form of computer-executable instructions or data structures and which can be accessed by a general purpose or special purpose computer.

Further, upon reaching various computer system components, program code in the form of computer-executable instructions or data structures can be transferred automatically or manually from transmission media to physical storage media (or vice versa). For example, computer-executable instructions or data structures received over a network or data link can be buffered in memory (e.g., RAM) within a network interface module (NIC), and then eventually transferred to computer system RAM and/or to less volatile physical storage media at a computer system. Thus, it should be understood that physical storage media can be included in computer system components that also (or even primarily) utilize transmission media.

One or more specific embodiments of the present disclosure are described herein. These described embodiments are examples of the presently disclosed techniques. Additionally, in an effort to provide a concise description of these embodiments, not all features of an actual embodiment may be described in the specification. It should be appreciated that in the development of any such actual implementation, as in any engineering or design project, numerous embodiment-specific decisions will be made to achieve the developers' specific goals, such as compliance with system-related and business-related constraints, which may vary from one embodiment to another. Moreover, it should be appreciated that such a development effort might be complex and time consuming, but would nevertheless be a routine undertaking of design, fabrication, and manufacture for those of ordinary skill having the benefit of this disclosure.

The articles "a," "an," and "the" are intended to mean that there are one or more of the elements in the preceding descriptions. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. For example, any element described in relation to an embodiment herein may be combinable with any element of any other embodiment described herein. Numbers, percentages, ratios, or other values stated herein are intended to include that value, and also other values that are "about" or "approximately" the stated value, as would be appreciated by one of ordinary skill in the art encompassed by embodiments of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 5%, within 1%, within 0.1%, or within 0.01% of a stated value.

A person having ordinary skill in the art should realize in view of the present disclosure that equivalent constructions do not depart from the spirit and scope of the present disclosure, and that various changes, substitutions, and alterations may be made to embodiments disclosed herein without departing from the spirit and scope of the present disclosure. Equivalent constructions, including functional "means-plus-function" clauses are intended to cover the structures described herein as performing the recited function, including both structural equivalents that operate in the same manner, and equivalent structures that provide the same function. It is the express intention of the applicant not to invoke means-plus-function or other functional claiming for any claim except for those in which the words 'means for' appear together with an associated function. Each addition, deletion, and modification to the embodiments that falls within the meaning and scope of the claims is to be embraced by the claims.

The terms "approximately," "about," and "substantially" as used herein represent an amount close to the stated amount that still performs a desired function or achieves a desired result. For example, the terms "approximately," "about," and "substantially" may refer to an amount that is within less than 5% of, within less than 1% of, within less than 0.1% of, and within less than 0.01% of a stated amount. Further, it should be understood that any directions or reference frames in the preceding description are merely relative directions or movements. For example, any references to "up" and "down" or "above" or "below" are merely descriptive of the relative position or movement of the related elements.

The present disclosure may be embodied in other specific forms without departing from its spirit or characteristics. The described embodiments are to be considered as illustrative and not restrictive. The scope of the disclosure is, therefore, indicated by the appended claims rather than by the foregoing description. Changes that come within the meaning and range of equivalency of the claims are to be embraced within their scope.

## Claims

1. A method, comprising:
receiving historical job data from at least one past wireline conveyance operation, the historical job data comprising:
static input data; and
timeseries input data;
processing the historical job data through a neural network (NN) configured to learn the relationships between input features and target variables comprising:
an input layer,
a plurality of hidden layers, and
an output layer;
integrating the neural network with a numerical physical tension model to form a physics-informed neural network (PINN);
training the PINN using the historical job data and estimation results of the physical model to enhance prediction accuracy;
utilizing the trained PINN to predict at least one physical parameter for a current wireline conveyance operation; and
outputting the predicted at least one physical parameter for use in the wireline conveyance operation.

2. The method of claim 1, further comprising planning the current wireline conveyance operation using the outputted predicted at least one physical parameter before the current wireline conveyance operation is started.

3. The method of claim 1 or 2, wherein the historical job data further comprises timeseries input data from the current wireline conveyance operation.

4. The method of claim 3, further comprising:
re-training the PINN using the historical job data including the timeseries input data from the current wireline conveyance operation and the estimation results of the physical model to further enhance prediction accuracy;
utilizing the re-trained PINN to update a prediction for the at least one physical parameter for the current wireline conveyance operation;
outputting the updated predicted at least one physical parameter; and
adjusting the current wireline conveyance operation using the outputted updated predicted at least one physical parameter.

5. The method of any one of the preceding claims, wherein the PINN comprises a customizable weight ranging between a weight using only the neural network and a weight using only the physical model estimation results, and any weighted combination of the neural network and the physical model estimation results.

6. The method of any one of the preceding claims, wherein the static input comprises one or more of: a tool string property, a cable property, a well profile, a well geometry, a wellbore fluid property, a viscous mud property, or a restriction.

7. The method of any one of the preceding claims, wherein the timeseries input comprises one or more of: cable speed, cable length, pumping rate, or tractor force.

8. The method of any one of the preceding claims, further comprising performing the current wireline conveyance operation based on the outputted predicted at least one physical parameter.

9. A system, comprising:
a processor; and
a non-transitory computer-readable medium storing instructions that, when executed, cause the processor to:
receive historical job data from at least one past wireline conveyance operation, the historical job data comprising:
static input data; and
timeseries input data;
process the historical job data through a neural network (NN) configured to learn the relationships between input features and target variables comprising:
an input layer,
a plurality of hidden layers, and
an output layer;
integrate the neural network with a numerical physical tension model to form a physics-informed neural network (PINN);
train the PINN using the historical job data and estimation results of the physical model to enhance prediction accuracy;
utilize the trained PINN to predict at least one physical parameter for a current wireline conveyance operation; and
output the predicted at least one physical parameter for use in the wireline conveyance operation.

10. The system of claim 9, wherein the instructions further cause the processor to plan the current wireline conveyance operation using the outputted predicted at least one physical parameter before the current wireline conveyance operation is started.

11. The system of claim 9 or 10, wherein the historical job data further comprises timeseries input data from the current wireline conveyance operation.

12. The system of claim 11, wherein the instructions further cause the processor to:
re-train the PINN using the historical job data including the timeseries input data from the current wireline conveyance operation and the estimation results of the physical model to further enhance prediction accuracy;
utilize the re-trained PINN to update a prediction for the at least one physical parameter for the current wireline conveyance operation;
output the updated predicted at least one physical parameter; and
adjust the current wireline conveyance operation using the outputted updated predicted at least one physical parameter.

13. The system of any one of the claims 9 - 12, wherein the PINN comprises a customizable weight ranging between a weight using only the neural network and a weight using only the physical model estimation results, and any weighted combination of the neural network and the physical model estimation results.

14. The system of any one of the claims 9 - 13, wherein the static input comprises one or more of: a tool string property, a cable property, a well profile, a well geometry, a wellbore fluid property, a viscous mud property, or a restriction; and wherein the timeseries input comprises one or more of: cable speed, cable length, pumping rate, or tractor force.

15. The system of any one of the claims 9 - 14, wherein the instructions further cause the processor to perform the current wireline conveyance operation based on the outputted predicted at least one physical parameter.
